# EUROPEAN PATENT APPLICATION

(11) **EP 3 561 227 A1**
(43) Date of publication of application: **30.10.2019**
(21) Application number: 19165095.1
(22) Date of filing: 26.03.2019
(51) Int. Cl.: F01D 5/14, B23K 1/00, B23P 15/04, F01D 5/18, F01D 9/06

(54) **A BLADE AND A METHOD OF MANUFACTURING A BLADE**

(30) Priority: 23.04.2018 GB 201806542
(71) Applicant: Rolls-Royce plc, London SW1E 6AT (GB)
(72) Inventor: Ireland, Peter, Derby, Derbyshire DE24 8BJ (GB); Green, Nicholas, Derby, Derbyshire DE24 8BJ (GB); Romero, Eduardo, Derby, Derbyshire DE24 8BJ (GB); Ngetich, Gladys, Derby, Derbyshire DE24 8BJ (GB)
(74) Representative: Rolls-Royce plc

(57) **Abstract**

Disclosed herein is a method of manufacturing a double walled section of an aerofoil (701) of a gas turbine engine (10), the method comprising: forming a plurality of columns (402) on an outer surface of a first structure; forming a plurality of columns (402) on a surface of each of a plurality of parts of a second structure; and forming a double walled section of an aerofoil (701) by attaching the ends of columns (402) on each part of the second structure to the ends of columns (402) on the first structure such that the first structure is an inner wall (401) of the section of the aerofoil (701) and the second structure is an outer wall (501) of the section of the aerofoil (701).

## Description

The present disclosure relates to the manufacture of a blade for use in a gas turbine engine. More particularly, the present disclosure is of a manufacturing technique of a blade with a double walled section. The blade may be used as one of the blades in the turbine of a gas turbine engine.

There is a general need to improve known manufacturing techniques of blades.

According to a first aspect there is provided a method of manufacturing a double walled section of an aerofoil of a gas turbine engine, the method comprising: forming a plurality of columns on an outer surface of a first structure; forming a plurality of columns on a surface of each of a plurality of parts of a second structure; and forming a double walled section of an aerofoil by attaching the ends of columns on each part of the second structure to the ends of columns on the first structure such that the first structure is an inner wall of the section of the aerofoil and the second structure is an outer wall of the section of the aerofoil.

The method may comprise forming a plurality of columns on the outer surface of the first structure by imprinting the columns in its outer surface; and/or for each of the plurality of parts of the second structure, forming a plurality of columns on the surface by imprinting the columns in the surface.

The method may comprise imprinting by Electrode Discharge Machining (EDM).

The method may comprise performing a smoothing operation that flattens the ends of each of the columns after the columns have been formed.

The method may comprise attaching the ends of columns on each part of the second structure to the ends of columns on the first structure by diffusion bonding or brazing the ends of the columns together.

The method may comprise forming a plurality of columns on the outer surface of the first structure by a plurality of manufacturing operations with each manufacturing operation forming a plurality of parallel columns in a single region of the first structure; and/or forming a plurality of columns on the surface of each part of the second structure by one or more manufacturing operations with each manufacturing operation forming a plurality of parallel columns in a single region of the second structure.

In the first aspect, a section of the aerofoil may be comprised by a turbine blade or a compressor blade.

In the first aspect, the turbine blade or compressor blade may be comprised by a leading-edge region, a mid-chord region and a trailing edge region; and the section of the aerofoil is the leading edge region and mid-chord region of the blade.

The method may comprise attaching each part of the second structure to one or more other parts of the second structure.

In the first aspect, the first structure may comprise a plurality of parts; and the method may comprise attaching each of the parts of the first structure to one or more other parts of the first structure.

In the first aspect, the first structure and/or one or more parts of the second structure may be formed by casting.

In the first aspect, the first structure and/or one or more parts of the second structure may comprise crystals that are directionally solidified.

In the first aspect, the first structure and/or one or more parts of the second structure may be single crystal super alloys.

In the first aspect, the first structure may be a walled structure with the walls providing an enclosed inner part of the section of the aerofoil and the second structure may be a walled structure with the walls enclosing the first structure, and the method may further comprise: forming one or more holes through the walls of the first structure; and forming one or more holes through the walls of the second structure, such that air in the inner part of the aerofoil can flow out of the aerofoil via the holes in the first structure and second structures.

The method may comprise positioning the holes in the walls of the first structure staggered with respect to the positioning of the holes in the walls of the second structure.

According to a second aspect there is provided an aerofoil that is manufactured according to the method of the first aspect.

According to a third aspect there is provided a double walled section of an aerofoil of a gas turbine engine, the double walled section of the aerofoil comprising: an inner wall with a plurality of columns protruding from its outer surface; an outer wall with a plurality of columns protruding from its inner surface; joints between the end surfaces of the columns on the inner wall and the end surfaces of the columns on the outer wall.

In the third aspect, the joints may be diffusion bonds or braised connections.

In the third aspect, the columns may be grouped to provide one or more interface regions; and within each of the interface regions, the joints between the ends of the columns are all in the same plane.

In the third aspect, the section of the aerofoil may be comprised by a turbine blade or a compressor blade.

In the third aspect, the turbine blade or compressor blade has a leading-edge region, a mid-chord region and a trailing edge region; and the section of the aerofoil is the leading edge region and mid-chord region.

According to a fourth aspect, there is provided a gas turbine engine for an aircraft comprising: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft; wherein one or more of the turbine and compressor comprise one or more sections of an aerofoil according to the third aspect.

In the fourth aspect, the turbine may be a first turbine, the compressor may be a first compressor, and the core shaft may be a first core shaft; the engine core may further comprise a second turbine, a second compressor, and a second core shaft connecting the second turbine to the second compressor; and the second turbine, second compressor, and second core shaft may be arranged to rotate at a higher rotational speed than the first core shaft; wherein one or more of the second turbine and second compressor comprise one or more sections of an aerofoil according to the third aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a cross-section of an inner wall of a blade after pedestals have been formed on the inner wall according to an embodiment;
**Figure 5** is a cross-section of both an inner wall and a plurality of parts of an outer wall according to an embodiment;
**Figures 6A** and **6B** are cross-sections of a blade according to an embodiment;
**Figure 7** shows a blade according to an embodiment with a portion of the blade cut away; and
**Figure 8** is flowchart of a method according to an embodiment.

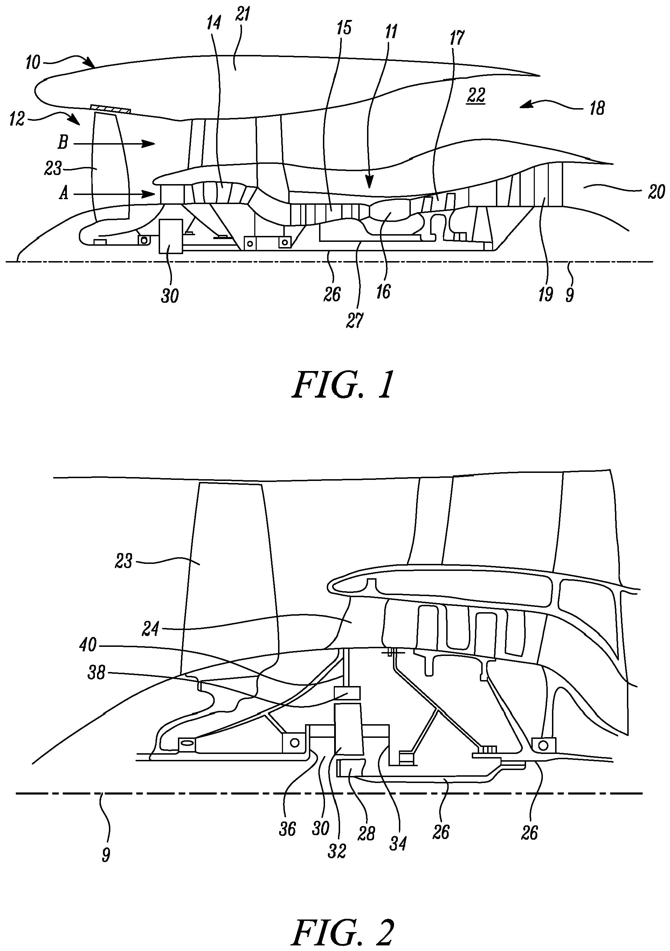

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

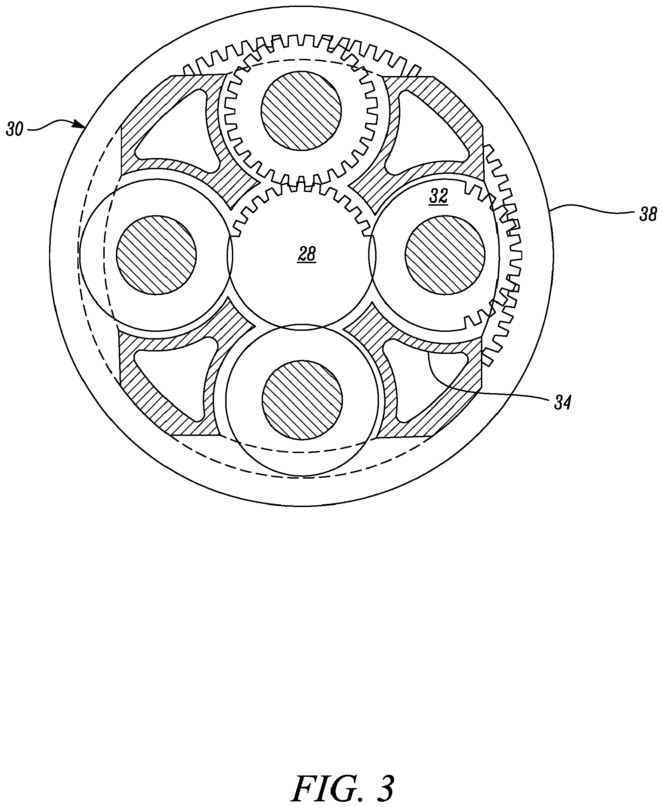

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The present disclosure provides an improved method of manufacture of a blade. The blades that are manufactured according to the present disclosure can be used as the blades of any of the components of the above-described gas turbine engine 10. The blades that are manufactured according to the present disclosure may be used as either high or low pressure turbine blades. However, the blades according to the present disclosure may be used in any of the other components of the gas turbine engine, such the first or second compressor.

In order to clearly present the context of the present disclosure, details of background technology are provided below.

An important property of blades in a gas turbine engine is how efficiently the blades can be cooled. Known techniques for cooling blades include transpiration cooling, as well as similar techniques such a effusion cooling and porous multi-wall cooling. Laminated multi-wall cooling schemes, in which a film is formed over at least part of the surface of the blade, are known to provide a practical implementation of these cooling schemes. The cooling schemes provide good cooling uniformity due to a series of highly distributed micro cooling channels. The heat transfer is also highly efficient as the cooling air is brought close to the outer surface of a blade.

Known multi-wall cooling blade designs with film cooling are disclosed in US6514042B2 and US5702232A. Both of these blades comprise a double wall configuration in the mid-chord region with radial feed passages on each side of the blade between the inner and outer wall. A problem with these known designs of blades is that they are difficult to manufacture. A method of manufacture is described in US5640767A. A partially-hollow blade support wall, that is formed by casting, with a desired outer profile has longitudinally-extending recesses, that are filled with channel fillers. A blade skin of a second material is then deposited, by methods comprising physical, chemical vapour deposition, thermal spraying and plating, onto the blade support wall such that the skin conforms and is metallurgically bonded to the blade support wall. The recesses' channel filler is removed and the combination of outer blade skin and blade support wall forms a double wall blade structure with the voids in the recess creating an integral internal chamber within the double walled structure. Another known manufacturing method of double walled blades is the Shell-and-Spar approach, as disclosed in Novikov et al, Creation of High Efficiency Turbine Cooled Blades With Structural Electron Beam Coatings', in collection of papers Electron Beam and Gas-Thermal Coatings, pages 87 to 97. This is similar to the manufacturing method described in US5640767A.

The known manufacturing techniques of double walled blades therefore comprise additive manufacturing. A problem with this manufacturing technique is that the layering processes introduce imperfections and it is difficult to construct surfaces with intricate details and without defects.

The present disclosure provides a new method of manufacturing double walled blades that avoids the problems associated with additive manufacturing processes. The blades may be effusion cooled aerofoils. The blades may be fabricated with a single crystal structure using known materials for blades. The blades may be made with intricate features, high surface quality and high mechanical strength.

The blades according to the present disclosure may be aerofoils that comprise a leading edge region, a mid-chord region and a trailing edge region. The leading edge region and mid-chord region may be constructed with double walls with the trailing edge region only having a single wall. The double wall is provided by an outer wall and an inner wall, which may alternatively be referred to as an outer skin and inner skin. The inner and outer walls are connected to each other by pedestals. A pedestal is a column. The columns can have a variety of shapes and may be linear with a substantially circular cross-section and a constant diameter along their length. The columns may alternatively be linear with a substantially square cross-section that is constant along their length. The pedestals protrude from corresponding surfaces of the inner and outer walls. The ends of the pedestals are flat and can therefore be joined together by, for example, diffusion bonding. The pedestals are effectively pin fins. The inner wall has holes through it that are referred to as impingement holes. The outer wall also has holes through it that are referred to as effusion holes. The impingement and effusion holes are positioned in a staggered arrangement with respect to each other. Accordingly, air can pass from an inner cavity of the blade, that is enclosed by the inner walls, through the impingement holes past the pedestals and out through the effusion holes. The air forms a transpiration-like film on at least part of the outer surface of the blade and is very effective at cooling the blade.

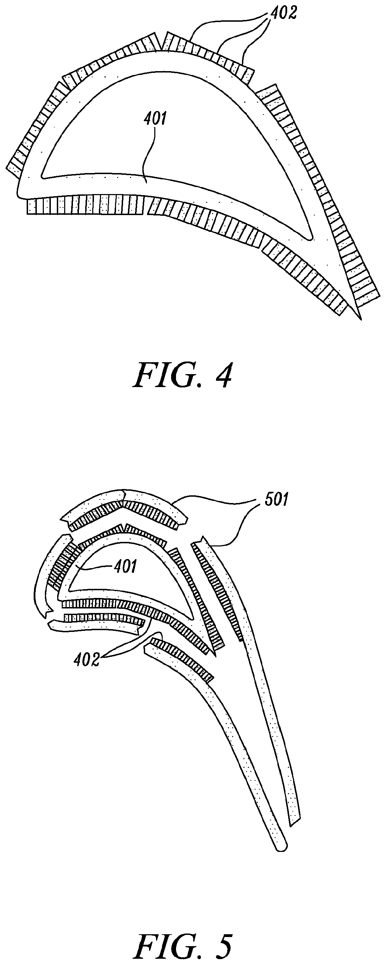

The present disclosure is described in more detail below with reference to Figures 4, 5, 6A, 6B and 7.

The inner wall 401 is initially manufactured without pedestals 402 in its surface. The pedestals 402 are then formed in its surface. The initial structure of the inner wall 401 may be manufactured through casting. The cast material may be directionally solidified or single crystal super alloy.

The pedestals 402 may be formed in the surface of the initial structure of the inner wall 401 by an imprinting process that removes material from the surface. The imprinting process may be milling/spark electrode discharge machining, EDM, using a graphite/tungsten tool. The tool may be configured with an exact negative of the desired pedestal pattern and may effectively be plunged into the surface of the initial structure of the inner wall 401 in order to form an array of a plurality of pedestals 402. The pedestals 402 are therefore part of the initial structure of the inner wall 401 and protrude from the surface of the inner wall 401 due to the imprinting process removing material around the pedestals 402 from the surface.

A plurality of imprinting processes are performed over the surface of the initial structure of the inner wall 401. Figure 4 shows the inner wall 401 after the imprinting processes have been performed. The pedestals 402 formed in each imprinting process are all aligned in the same direction. In order for pedestals 402 to be formed over the entire surface of the inner wall 401, a plurality of imprinting processes may be performed from different directions. The number of directions that the pedestals 402 are aligned in may therefore the same as the number of different directions of the imprinting processes.

After the pedestals 402 have been formed, a smoothing operation may be performed in order to flatten the tops of the pedestals 402. This may also ensure that all of the pedestals 402 have the desired height. The smoothing operation may be, for example, a grinding operation.

The distance between two adjacent pedestals 402 on the inner wall 401 may be in the range 0.5mm to 1.5mm. If a pedestal 402 on the inner wall 401 has a substantially square cross-section that is constant along the length of the pedestal 402, the length of a side of the square cross-section of the pedestal 402 may be in the range 0.5mm to 1.5mm. The height of a pedestal 402 on the inner wall 401 after the smoothing operation may be in the range 0.5mm to 1.5mm.

The outer wall 501 may be initially manufactured as a structure with a plurality of separate parts. Each of the parts of the initial structure of the outer wall 501 may be initially manufactured without pedestals 402 in its surface. The pedestals 402 may then formed in a surface of each part. Each part may be manufactured through casting. The cast material may be directionally solidified or single crystal super alloy.

The pedestals 402 may be formed in the surface of each part of the initial structure of the outer wall 501 by an imprinting process that removes material from the surface. The imprinting process may be milling/spark electrode discharge machining, EDM, using a graphite/tungsten tool as described above for the formation of pedestals 402 on the outer surface of the inner wall 401. The tool may be configured with an exact negative of the desired pedestal pattern and may effectively be plunged into the surface in order to form an array of a plurality of pedestals 402. The pedestals 402 are therefore comprised by the part of the initial structure of the outer wall 501 and protrude from the surface of the part due to the imprinting process removing material around the pedestals 402 from the surface.

Each part of the initial structure of the outer wall 501 may have one or more imprinting processes performed on it. Figure 5 shows the plurality parts of the initial structure of the outer wall 501 with pedestals 402 formed in a surface of each part. As described for the formation of pedestals 402 in the outer surface of the inner wall 401, the pedestals 402 formed in each imprinting process are all aligned in the same direction. Imprinting processes may be performed from different directions on the same part.

After the pedestals 402 have been formed in a surface of each part of the initial structure of the outer wall 501, a smoothing operation is performed in order to flatten the tops of the pedestals 402. This may also ensure that all of the pedestals 402 have the desired height. The smoothing operation may be, for example, a grinding operation.

The distance between two adjacent pedestals 402 on the outer wall 501 may be in the range 0.5mm to 1.5mm. If a pedestal 402 on the outer wall 501 has a substantially square cross-section that is constant along the length of the pedestal 402, the length of a side of the square cross-section of the pedestal 402 may be in the range 0.5mm to 1.5mm. The height of a pedestal 402 on the outer wall 501 after the smoothing operation may be in the range 0.5mm to 1.5mm.

On the inner wall 401, each group of adjacent pedestals 402 with flattened ends that are all in the same plane provides an attachment interface to the inner wall 401. On each part of the outer wall 501, each group of adjacent pedestals 402 with flattened ends that are all in the same plane provides an attachment interface to the part of the outer wall 501. Each attachment interface to the inner wall 401 has a corresponding attachment interface on a part of the outer wall 501. Each pedestal on the inner wall 401 is therefore arranged to be attached to a corresponding pedestal on a part of the outer wall 501.

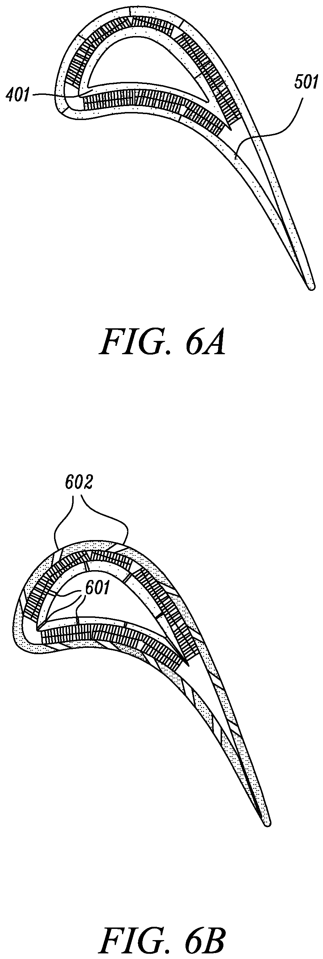

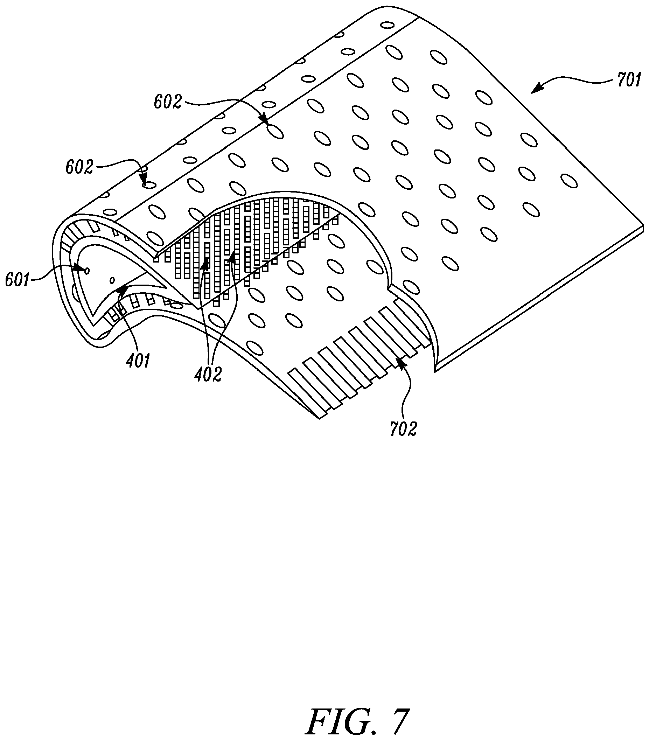

Figures 6A and 6B show cross-sections of a blade 701 according to the present disclosure. Figure 7 shows a blade 701 according to the present disclosure with a portion of the outer wall 501 cut away so as to show the pedestals 402. The trailing edge region of the blade 701 may comprise TE slots.

A blade 701 according to the present disclosure is formed by attaching each of the parts of the outer wall 501 to the inner wall 401. Each part of the outer wall 501 may be attached to the inner wall 401 by joining the end surfaces of all of the pedestals 402 in the one or more interfaces of the part of the outer wall 501 and the corresponding one or more interfaces on the inner wall 401. The end surfaces of the pedestals 402 may be joined together by diffusion bonding or brazing. This technique is possible since the end surfaces of each of the pedestals 402 being joined are all flat and parallel to each other. The joints in each of the interfaces may therefore all be in the same plane.

Adjacent parts of the outer wall 501 may also be directly attached to each other, such as by diffusion bonding or brazing, so that the parts of the outer wall 501 are no longer separated from each other.

As shown in Figures 6B and 7, there are impingement holes 601 through the inner wall 401 and effusion holes 602 through the outer wall 501. The initial structures of both the inner wall 401 and each part of the outer wall 501 may be made with these holes. For example, the initial structures may be cast with these holes. Alternatively, the holes may be formed in the initial structures of both the inner wall 401 and each part of the outer wall 501 after the initial structures have been manufactured.

Possible advantages of the above manufacturing technique may include the pedestals 402 all being integral with either the inner or outer wall 501. The attachment of each pedestal to the wall may therefore be very strong. Another advantage may be that the outer surface of the blade 701 does not need to be altered after each part of the initial structure of the outer surface has been manufactured. The features of outer surface may therefore be made with high precision.

As explained above, a plurality of machining operations are performed in order to form pedestals 402 in the inner wall 401. Each machining operation cuts out some of the surface in order to form an interface comprising a plurality of parallel columns. Due to the nonplanar shape of the inner wall 401, adjacent interfaces may not be co-linear with each other and there may be an oblique or reflex angle between adjacent interfaces. The portion of the outer surface of the inner wall 401 between any two adjacent interfaces may therefore not have any material cut away by a machining operation. There may also be a corresponding portion on one or more parts of the outer wall 501 without pedestals 402. Since there may be no pedestals 402 in these portions between interfaces, the portions may not be cooled as much as the parts of the walls with pedestals 402 and, in particular on the outer wall 501, may become hot spots. If such hot spots are too large then they overheat and degrade operation. The size of the hot spots can be reduced by increasing the number of interfaces that are formed in the inner wall 401 so that the plurality of linear interfaces more closely approximate the shape of the inner wall 401. However, increasing the number of machining operations increases the cost of manufacture. There is therefore a trade off between the number of interfaces and the cost of manufacture.

The number, shape, size and position of all of the pedestals 402, effusion holes 602 and impingement holes 601 can be varied in order to achieve minimal aerodynamic losses and to maximise the cooling of the blade 701. The position of the effusion holes 602 and impingement holes 601 may be staggered with respect to each other.

Advantageously, the flow of air from inside the inner walls 401, through the impingement holes 601, past the pedestals 402 and through the effusion holes may result in a transpiration-like film being formed on the outer surface of the blade 701 and good cooling properties. Compared to known blades, the required cooling air consumption may be reduced and efficiency may be increased.

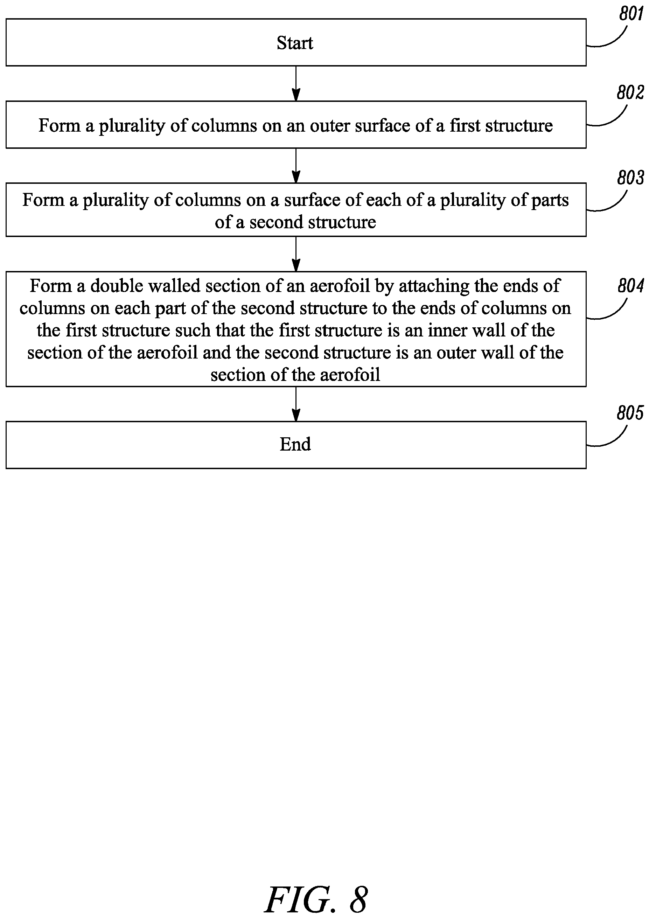

Figure 8 is a flowchart of a method of manufacturing a double walled section of an aerofoil of a gas turbine engine according to the present disclosure.

In 801, the method begins.

In 802, a plurality of columns are formed on an outer surface of a first structure.

In 803, a plurality of columns are formed on a surface of each of a plurality of parts of a second structure.

In 804, a double walled section of an aerofoil is formed by attaching the ends of columns on each part of the second structure to the ends of columns on the first structure such that the first structure is an inner wall of the section of the aerofoil and the second structure is an outer wall of the section of the aerofoil.

In 805, the method ends.

Embodiments include a number of modifications and variations to the techniques as described above.

For example, in addition to the outer wall 501, the inner wall 401 may also be initially formed as a plurality of separate parts that are later attached together. The pedestals 402 and parts of the outer wall 501 may be joined together by other techniques, such as welding.

The imprinting processes may alternatively be performed by other techniques than EDM. For example, any of CNC milling, casting, abrasive jet machining, water jet machining, laser cutting or electronic beam machining may alternatively be used for the imprinting processes.

The end surfaces of the pedestals 402 may alternatively be joined together by other techniques than diffusion bonding or brazing. For example, friction welding or adhesive bonding may be used to join the end surfaces of the pedestals 402.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of manufacturing a double walled section of an aerofoil (701) of a gas turbine engine (10), the method comprising:
forming a plurality of columns (402) on an outer surface of a first structure;
forming a plurality of columns (402) on a surface of each of a plurality of parts of a second structure; and
forming a double walled section of an aerofoil (701) by attaching the ends of columns (402) on each part of the second structure to the ends of columns (402) on the first structure such that the first structure is an inner wall (401) of the section of the aerofoil (701) and the second structure is an outer wall (501) of the section of the aerofoil (701).

2. The method as claimed in claim 1, wherein:
forming a plurality of columns (402) on the outer surface of the first structure comprises imprinting the columns (402) in its outer surface; and/or
for each of the plurality of parts of the second structure, forming a plurality of columns (402) on the surface comprises imprinting the columns (402) in the surface.

3. The method as claimed in claim 1 or 2, further comprising performing a smoothing operation that flattens the ends of each of the columns (402) after the columns (402) have been formed.

4. The method as claimed in any preceding claim, wherein attaching the ends of columns (402) on each part of the second structure to the ends of columns (402) on the first structure comprises diffusion bonding or brazing the ends of the columns (402) together.

5. The method as claimed in any preceding claim, wherein forming a plurality of columns (402) on the outer surface of the first structure is performed by a plurality of manufacturing operations with each manufacturing operation forming a plurality of parallel columns (402) in a single region of the first structure; and/or
wherein forming a plurality of columns (402) on the surface of each part of the second structure is performed by one or more manufacturing operations with each manufacturing operation forming a plurality of parallel columns (402) in a single region of the second structure.

6. The method as claimed in any preceding claim, further comprising attaching each part of the second structure to one or more other parts of the second structure.

7. The method as claimed in any preceding claim, wherein the first structure comprises a plurality of parts; and
the method comprises attaching each of the parts of the first structure to one or more other parts of the first structure.

8. The method according to any preceding claim, wherein the first structure and/or one or more parts of the second structure are formed by casting.

9. The method as claimed in any preceding claim, wherein the first structure and/or one or more parts of the second structure are single crystal super alloys.

10. The method as claimed in any preceding claim, wherein the first structure is a walled structure with the walls providing an enclosed inner part of the section of the aerofoil (701) and the second structure is a walled structure with the walls enclosing the first structure, wherein the method further comprises:
forming one or more holes (601) through the walls of the first structure; and
forming one or more holes (602) through the walls of the second structure, such that air in the inner part of the aerofoil (701) can flow out of the aerofoil (701) via the holes in the first structure and second structures.

11. The method as claimed in claim 10, wherein the positioning of the holes (601) in the walls of the first structure is staggered with respect to the positioning of the holes (602) in the walls of the second structure.

12. An aerofoil (701) that is manufactured according to the method of any one of claims 1 to 11.

13. A double walled section of an aerofoil (701) of a gas turbine engine (10), the double walled section of the aerofoil (701) comprising:
an inner wall (401) with a plurality of columns (402) protruding from its outer surface;
an outer wall (501) with a plurality of columns (402) protruding from its inner surface;
joints between the end surfaces of the columns (402) on the inner wall (401) and the end surfaces of the columns (402) on the outer wall (501).

14. The double walled section as claimed in claim 13, wherein the joints are diffusion bonds or braised connections.

15. The double walled section as claimed in claim 14, wherein the columns (402) are grouped to provide one or more interface regions; and
within each of the interface regions, the joints between the ends of the columns (402) are all in the same plane.
